# EUROPEAN PATENT APPLICATION

(11) **EP 1 777 571 A2**
(43) Date of publication of application: **25.04.2007**
(21) Application number: 06020941.8
(22) Date of filing: 05.10.2006
(51) Int. Cl.: G02B 21/06, G02B 21/00

(54) **Microscope examination apparatus and microscope examination method**

(30) Priority: 21.10.2005 JP 2005306714
(71) Applicant: Olympus Corporation, Tokyo 151-0072 (JP)
(72) Inventor: Kawano, Yoshihiro, Fuchi-shi Tokyo 183-0035 (JP)
(74) Representative: von Hellfeld, Axel

(57) **Abstract**

Multiple fluorescences are produced even though a comparatively small light source is used, and a clear, high-resolution fluorescence image is obtained. The invention provides a microscope examination apparatus comprising a light-source unit for emitting a line-shaped excitation beam, and an observation optical system having an observation optical axis aligned in a direction orthogonal to the excitation beam from the light-source unit. A focal position of the observation optical system is disposed in the path of the excitation beam from the light-source unit.

## Description

### BACKGROUND OF THE INVENTION

### 1. FIELD OF THE INVENTION

The present invention relates to microscope examination apparatuses and to microscope examination methods.

### 2. DESCRIPTION OF RELATED ART

In PCT International, Publication No. 2004-053558A1 pamphlet (Patent Document 1), there is disclosed a microscope examination method in which a wide, flat band of excitation light from a single light source is introduced to a specimen, and fluorescence produced inside the specimen is detected with an observation optical system having an observation optical axis aligned in a direction orthogonal to the excitation light.

However, if the fluorescence produced inside the specimen due to irradiation with the excitation light is weak, particularly when examining an internal organ of a relatively large specimen such as a mouse or rat, the microscope examination method disclosed in Patent Document 1 suffers from the drawback that the fluorescence is too weak, and therefore, it is not possible to acquire a fluorescence image of sufficient resolution.

### BRIEF SUMMARY OF THE INVENTION

The present invention has been conceived in light of the above circumstances, and it is an object thereof to provide a microscope examination apparatus and a microscope examination method in which it is possible to produce multiple fluorescences, even though a relatively small light source is used, and in which a bright, high-resolution fluorescence image can be acquired.

In order to realize the object described above, the present invention provides the following solutions.

According to one aspect, the present invention provides a microscope examination apparatus comprising a light-source unit configured to emit a line-shaped excitation beam; and an observation optical system having an observation optical axis disposed in a direction orthogonal to the excitation beam from the light-source unit, wherein a focal position of the observation optical system is disposed in the path of the excitation beam from the light-source unit.

According to the present invention, when the line-shaped excitation beam is made incident on the specimen by operating the light source unit, fluorescent substances at sites in the specimen which are disposed in the path of the excitation beam are excited by the excitation beam, and fluorescence is produced. The fluorescence produced is emitted in all directions, but because the observation optical axis of the observation optical system is aligned in a direction orthogonal to the excitation beam, the fluorescence emitted in the direction of the observation optical axis is acquired by the observation optical system.

In such a case, the fluorescence produced at any site located in the direction parallel to the observation optical axis is acquired by the observation optical system. However, because the irradiation position of the excitation beam is coincident with the focal position of the observation optical system, little fluorescence is produced at other sites, and only the fluorescence produced from an extremely thin region in the vicinity of the focal position is acquired. Therefore, it is possible to acquire an in-focus, clear fluorescence image, and the observation accuracy can thus be improved.

Furthermore, according to the present invention, because the excitation beam is in the form of a straight line, it is possible to irradiate the vicinity of the focal position with an extremely high grid density, even though a device having a large output power is used as the light source. Therefore, it is possible for the acquired fluorescence image to be bright and have high resolution.

In the aspect of the invention described above, the light-source unit may include a scanning unit configured to scan the line-shaped excitation beam in a direction orthogonal to the excitation beam and the observation optical axis.

By doing so, it is possible to make the line-shaped excitation beam pass through the specimen at a plurality of positions by operating the scanning unit. Therefore, it is possible to acquire a bright, clear fluorescence image over a two-dimensional region with the observation optical system.

In the aspect of the invention described above, the scanning unit preferably scans the line-shaped excitation beam in a focal plane of the observation optical system.

With this configuration, it is possible to focus on the fluorescence produced at all positions in the path of the excitation beam passing through the inside of the specimen. Therefore, it is possible to acquire an in-focus, bright, clear fluorescence image at each position without moving the observation optical system.

In the aspect of the invention described above, the scanning unit preferably includes a translational-conversion member configured to make the line-shaped excitation beam move in a translational manner.

With this configuration, the excitation beam is made to move in a translational manner by the function of the translational-converting member. In other words, by disposing the specimen in the region where the line-shaped excitation beam is made to move in a translational manner, when viewed from a direction along the observation optical axis, it is possible to irradiate the specimen with excitation beams at a uniform density.

In the aspect of the invention described above, the light-source unit may include a plurality of light sources configured to emit a plurality of line-shaped excitation beams which are separated in a direction orthogonal to the observation optical axis.

With this configuration, it is possible to make the line-shaped excitation beam pass through a plurality of positions in the specimen, in the same way as in the case of the scanning unit. Therefore, it is possible to acquire a bright, clear fluorescence image of a two-dimensional region with the observation optical system.

In the aspect of the invention described above, the plurality of line-shaped excitation beams may be disposed in parallel with gaps therebetween.

With this configuration, by making a plurality of line-shaped excitation beams pass through the specimen, when viewed from a direction along the observation optical axis, it is possible to irradiate the specimen with the excitation beams at uniform density.

The aspect of the invention described above may further comprise a stage for mounting a specimen; and a stage driving mechanism configured to move the stage in a direction parallel to the observation optical axis.

With this configuration, at a plurality of positions along the observation optical axis, it is possible to make the line-shaped excitation beam incident on the specimen in a direction orthogonal to the observation optical axis. As a result, it is possible to acquire a three-dimensional fluorescence image of the specimen while keeping the observation optical system and the light source unit fixed.

The aspect of the invention described above may further comprise a first imaging unit configured to image an outline of the specimen; a second imaging unit configured to image the fluorescence from the specimen, which is detected by the observation optical system; and a display unit configured to superimpose and display an outline image and a fluorescence image formed by the first and second imaging units.

With this configuration, the outline image of the specimen is formed by operating the first imaging unit, and the fluorescence image of the specimen is formed by operating the second imaging unit. Therefore, by superimposing and displaying the outline image and the fluorescence image on a display unit, it is possible to associate the fluorescence image and the outline image with each other , and to easily confirm from which site in the specimen the fluorescence is produced.

In the aspect of the invention described above, the first imaging unit may include an intensity-distribution detecting unit configured to detect an intensity distribution of the excitation beam passing through the specimen and forms the outline image of the specimen based on a plurality of intensity distributions of the excitation beam that are detected by making the excitation beam pass through the specimen in a plurality of directions.

With this configuration, the intensity distribution of the excitation beam passing through the specimen is detected for a plurality of directions, and it is thus possible to determine the transmittance of each point in the specimen. Therefore, it is possible to easily image the outline of the specimen based on this transmittance distribution. Accordingly, because the outline of the specimen is imaged using the light-source unit which irradiates the specimen with the excitation beam, it is possible to easily construct the apparatus.

The aspect of the invention described above may further comprise a second observation optical system which is disposed at the opposite side from the observation optical system so as to flank the line-shaped excitation beam emitted from the light source unit.

Because the fluorescence produced from inside the specimen is scattered as a result of being transmitted through the specimen and entering the observation optical system, the resolution of the fluorescence image at a relatively shallow position below the surface of the specimen is high, whereas the resolution of a fluorescence image at a relative deep position is low.

According to the present invention, by acquiring a fluorescence image at the surface at one side of the specimen using the observation optical system and by acquiring a fluorescence image at the surface at the opposite side of the specimen using the second observation optical system, it is possible to acquire a high-resolution fluorescence image at all regions in the depth direction of the specimen. In addition, compared to a case in which a single observation optical system is inverted with respect to the specimen to carry out observation, it is possible to acquire a high-resolution fluorescence image of the entire specimen in the thickness direction within a short period of time while keeping the observation optical system fixed, and without the need for a large apparatus.

The aspect of the invention described above preferably further comprises a transparent vessel configured to contain the specimen; and a medium having the same refractive index as the specimen, the medium filling a gap between the vessel and the specimen inside the vessel, wherein the vessel is disposed so that the line-shaped excitation beam is orthogonally incident at an outer surface of the vessel.

With this configuration, the line-shaped excitation beam emitted from the light-source unit is made incident on the specimen after passing through the transparent vessel and medium. Because the excitation beam is orthogonally incident on the outer surface of the transparent vessel and because the medium having the same refractive index as the specimen fills the space between the vessel and the specimen, the excitation beam is incident on the surface of the specimen without experiencing refraction. Therefore, it is possible to make the line-shaped excitation beam incident at the correct position relative to the observation optical system, and it is thus possible to acquire a clear fluorescence image.

In the aspect of the invention described above, the medium may be a liquid filled in a bag-like member that can deform so as to make close contact with the surface of the specimen; and the bag-like member may have the same refractive index as the specimen and be disposed between the light-source unit and the specimen.

With this configuration, the bag-like member can be deformed to make close contact with the surface of the specimen, and the space between the vessel and the specimen can be filled with the medium. Therefore, it is possible to make the excitation beam incident at the correct position of the specimen without being refracted, while preventing direct contact of the medium with the specimen.

According to another aspect, the present invention provides a microscope examination method comprising the steps of introducing line-shaped excitation beam to a specimen; aligning an observation optical axis of an observation optical system in a direction orthogonal to the excitation beam; disposing a focal position of the observation optical system in a path of the excitation beam; and detecting fluorescence emitted from inside the specimen in the direction of the observation optical axis with the observation optical system.

According to the present invention, when the line-shaped excitation beam is made incident on the specimen, fluorescent substances at sites in the specimen which are disposed in the path of the excitation beam are excited by the excitation beam, and fluorescence is produced. The fluorescence produced is emitted in all directions, but because the observation optical axis of the observation optical system is aligned in a direction orthogonal to the excitation beam, the fluorescence emitted in the direction of the observation optical axis is acquired by the observation optical system.

In such a case, the fluorescence produced at any site located in the direction parallel to the observation optical axis is acquired by the observation optical system. However, because the irradiation position of the excitation beam is coincident with the focal position of the observation optical system, little fluorescence is produced at other sites, and only the fluorescence produced from an extremely thin region in the vicinity of the focal position is acquired. Therefore, it is possible to acquire an in-focus, clear fluorescence image, and the observation accuracy can thus be improved.

Furthermore, according to the present invention, because the excitation beam is in the form of a straight line, it is possible to irradiate the vicinity of the focal position with an extremely high grid density, even though a device having a large output power is used as the light source. Therefore, it is possible for the acquired fluorescence image to be bright and have high resolution.

The aspect of the invention described above may further comprise the step of scanning the excitation beam in a direction orthogonal to both the excitation beam and the observation optical axis.

By doing so, it is possible to make the line-shaped excitation beam pass through the specimen at a plurality of positions. Therefore, it is possible to acquire a bright, clear fluorescence image over a two-dimensional region using with the observation optical system.

The aspect of the invention described above preferably further comprises the step of scanning the excitation beam along a focal plane of the observation optical system.

With this configuration, it is possible to focus on the fluorescence produced at all positions in the path of the excitation beam passing through the inside of the specimen. Therefore, it is possible to acquire an in-focus, bright, clear fluorescence image at each position without moving the observation optical system.

In the aspect of the invention described above, the excitation beam is preferably made to move in a translational manner.

With this configuration, by disposing the specimen in the region where the line-shaped excitation beam is made to move in a translational manner, when viewed from a direction along the observation optical axis, it is possible to irradiate the specimen with excitation beams at a uniform density.

In the aspect of the invention described above, a plurality of line-shaped excitation beams which are spaced in a direction orthogonal to the observation optical axis may be made incident on the specimen.

With this configuration, it is possible to make the line-shaped excitation beam pass through a plurality of positions in the specimen. Therefore, it is possible to acquire a bright, clear fluorescence image of a two-dimensional region with the observation optical system.

In the aspect of the invention described above, the plurality of line-shaped excitation beams may be arranged in parallel with spaces therebetween.

With this configuration, a plurality of line-shaped excitation beams are made to pass through the specimen, and when viewed from a direction along the observation optical axis, it is possible to irradiate the specimen with the excitation beams at uniform density.

The aspect of the invention described above may further comprise the step of moving the specimen in a direction parallel to the observation optical axis.

With this configuration, at a plurality of positions along the observation optical axis, it is possible to make the line-shaped excitation beam incident on the specimen in a direction orthogonal to the observation optical axis. As a result, it is possible to acquire a three-dimensional fluorescence image of the specimen while keeping the observation optical system and the line-shaped excitation beam fixed.

The aspect of the invention described above may further comprise the steps of imaging an outline of the specimen; imaging the fluorescence from the specimen, which is detected by the observation optical system; and superimposing and displaying the imaged outline image and fluorescence image.

With this configuration, the fluorescence image and the outline image are associated with each other, and it is thus possible to easily confirm from which site on the specimen the fluorescence was produced.

In the aspect of the invention described above, the outline of the specimen may be imaged based on a plurality of intensity distributions of the excitation beam which is made to pass through the specimen in a plurality of directions.

With this configuration, it is thus possible to determine the transmittance of each point in the specimen from the intensity distribution of the excitation beam passing through the specimen, which is detected for a plurality of directions. Therefore, it is possible to easily image the outline of the specimen based on this transmittance distribution.

In the aspect of the invention described above, the specimen may be contained in a transparent vessel; a medium having the same refractive index as the specimen may fill a gap between the vessel and the specimen; and the excitation beam may be orthogonally incident at an outer surface of the vessel.

With this configuration, the line-shaped excitation beam is made incident on the specimen after passing through the transparent vessel and medium. Because the excitation beam is orthogonally incident on the outer surface of the transparent vessel and because the medium having the same refractive index as the specimen fills the space between the vessel and the specimen, the excitation beam is incident on the surface of the specimen without experiencing refraction. Therefore, it is possible to make the line-shaped excitation beam incident at the correct position relative to the observation optical system, and it is thus possible to acquire a clear fluorescence image.

In the aspect of the invention described above, the medium, which is a liquid, may be filled in a bag-like member which can deform so as to be in close contact with the surface of the specimen and which has the same refractive index as the specimen; and the excitation beam may be made incident on the specimen via the bag-like member.

With this configuration, the bag-like member can be deformed to make close contact with the surface of the specimen, and the space between the vessel and the specimen can be filled with the medium. Therefore, it is possible to make the excitation beam incident at correct positions of the specimen without being refracted, while preventing direct contact of the medium with the specimen.

According to another aspect, the present invention provides a microscope examination method comprising the steps of introducing a line-shaped excitation beam to a specimen; aligning an observation optical axis of an observation optical system in a direction orthogonal to the excitation beam; disposing a focal position of the observation optical system in a path of the excitation beam; acquiring a plurality of two-dimensional fluorescence images by repeating a step of two-dimensionally detecting fluorescence emitted from inside the specimen in the direction of the observation optical axis with the observation optical system, and a step of moving the specimen in the direction of the observation optical axis; and creating a three-dimensional fluorescence image of the specimen based on the acquired plurality of two-dimensional fluorescence images.

With this configuration, it is possible to easily create bright, clear three-dimensional fluorescence image.

The present invention affords an advantage in that it is possible to produce multiple fluorescences even though a relatively small light source is used, and it is possible to acquire a bright, high-resolution fluorescence image.

### BRIEF DESCRIPTION OF THE SEVERAL VIEWS OF THE DRAWINGS

Fig. 1 is a perspective view illustrating the overall configuration of a microscope examination apparatus according to a first embodiment of the present invention.
Fig. 2 is a perspective view showing a first modification of the microscope examination apparatus in Fig. 1.
Fig. 3 is a perspective view showing a second modification of the microscope examination apparatus in Fig. 1.
Fig. 4 is a perspective view showing a third modification of the microscope examination apparatus in Fig. 1.
Fig. 5 is a plan view showing an example of incident laser beams in the microscope examination apparatus in Fig. 4.
Fig. 6 is a perspective view illustrating the overall configuration of a microscope examination apparatus according to a second embodiment of the present invention.
Fig. 7 is a plan view showing the relationship between a specimen inside a vessel and laser beams in the microscope examination apparatus in Fig. 6.
Fig. 8 is a plan view showing a modification of Fig. 7.

### DETAILED DESCRIPTION OF THE INVENTION

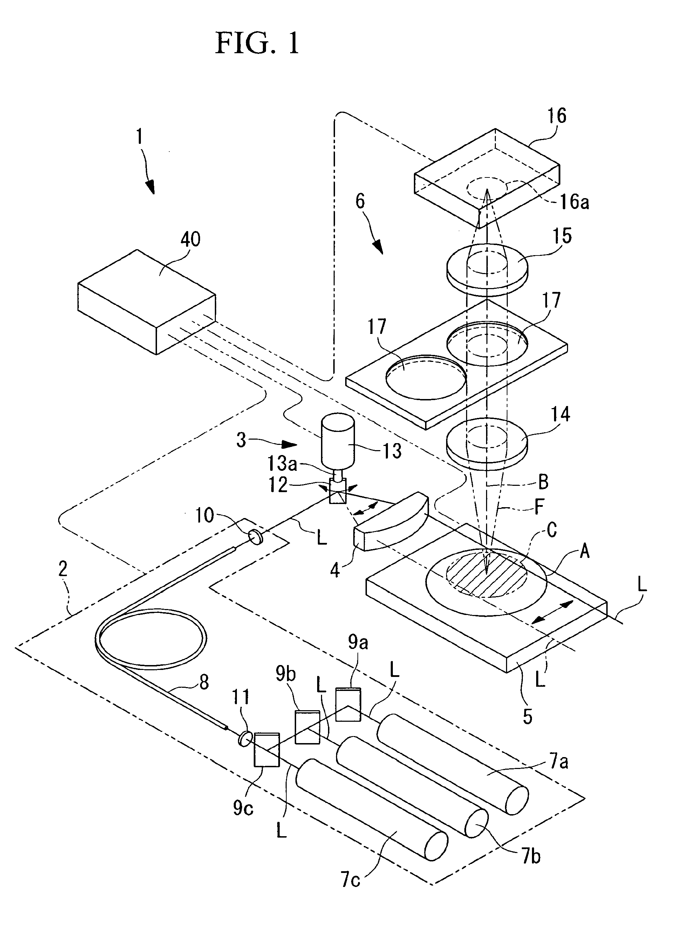

A microscope examination apparatus 1 according to a first embodiment of the present invention will be described below with reference to Fig. 1.

As shown in Fig. 1, the microscope examination apparatus 1 according to this embodiment includes a light source unit 2 for emitting a laser beam L; a scanning unit 3 for one-dimensionally scanning the line-shaped laser beam L emitted from the light-source unit 2; a cylindrical lens (translational-conversion member) 4 for orienting the series of laser beams L after scanning by the scanning unit 3 to be substantially parallel to each other; a stage 5 for mounting a specimen A; an observation optical system 6 for observing fluorescence F emitted from the specimen A; and a computer 40 for controlling the light-source unit 2, the scanning unit 3, the stage 5, and the observation optical system 6.

The light-source unit 2 includes, for example, a plurality of laser light sources 7a to 7c emitting laser beams L of different wavelengths; an optical fiber 8 into which the laser beams L from the laser light sources 7a to 7c are launched at one end thereof; a mirror 9a and dichroic mirrors 9b and 9c for combining the optical paths of the plurality of laser beams L launched into one end of the optical fiber 8; and a collector lens 10 for collecting the combined laser beam L exiting from the other end of the optical fiber 8 and for converting it into a straight line having a sufficiently narrow beam diameter. Reference numeral 11 in the drawing is a coupling lens. The light-source unit 2 also includes a wavelength-selection/light-modulating mechanism for the laser beams L (not shown in the drawing), which is controlled by the computer 40.

The scanning unit 3 includes a galvanometer mirror 12 for reflecting the line-shaped laser beam L emerging from the collector lens 10 and a motor 13 for varying the angle of the galvanometer mirror 12. Rocking the galvanometer mirror 12 back and forth over a predetermined angular range by operating the motor 13 allows the line-shaped laser beam L to be fanned out in a plane perpendicular to a rotation shaft 13a of the motor 13 (for example, in a horizontal plane).

By transmitting the line-shaped laser beams L fanned out by the scanning unit 3, the cylindrical lens 4 refracts the laser beams L such that it they become substantially parallel at all angular positions. Accordingly, as the laser beam L is oscillated by the scanning unit 3, it is made to move in a translational manner in a single plane (for example, the horizontal plane). Instead of the cylindrical lens 4, it is possible to use an fθ lens.

The stage 5 is disposed such that, as well as mounting the specimen A, it positions the specimen A in the area where the line-shaped laser beam L is made to move in a translational manner. The stage 5 is provided with a stage driving mechanism (not shown in the drawing) for moving the stage 5 in a direction perpendicular to the plane in which the laser beam L is scanned (for example, the vertical direction). Thus, it is possible to make the line-shaped laser beam L incident along different planes of the mounted specimen A.

The observation optical system 6 includes an objective lens 14; an image-forming lens 15; and an image-acquisition device 16, such as a CCD camera. The objective lens 14, whose observation optical axis B is disposed parallel to the moving direction of the stage 5 (for example, the vertical direction), collects fluorescence F emitted from the specimen A. The image-forming lens 15 focuses the fluorescence F collected by the objective lens 14. The image-acquisition device 16 has an image-acquisition surface 16a disposed at the focal position of the image-forming lens 15. Reference numerals 17 in the drawing are filters for changing the wavelength of the fluorescence F to be imaged.

A focal plane C of the objective lens 14 is adjusted so as to be coincident with the scanning plane of the laser beam L.

The computer 40 is connected to the light-source unit 2, the scanning unit 3, the stage 5, and the observation optical system 6, performs modulation or wavelength selection of the laser beam L emitted from the light-source unit 2, and controls the motor 13 of the scanning unit 3 and the stage driving mechanism of the stage 5 to adjust the incident position of the laser beam L on the specimen A. The computer 40 also controls the image-acquisition timing of the image-acquisition device 16 in the observation optical system 6.

The operation of the microscope examination apparatus 1 according to this embodiment, having such a configuration, will be described below.

To carry out examination of the specimen A using the microscope examination apparatus 1 according to this embodiment, the specimen A is fixed on the stage 5, and the stage 5 is stopped at a predetermined position. Then, the laser beam L is emitted from the light-source unit 2 while the galvanometer mirror 12 is oscillated back and forth by the motor 13.

The laser beam L emitted from one of the laser light sources 7a to 7c, is made incident on one end of the optical fiber 8 via the mirror 9a or the dichroic mirror 9b or 9c. After emerging from the other end of the optical fiber 8, the beam diameter of the light beam L is reduced by the collector lens 10, and the laser beam L is incident on the galvanometer mirror 12 in the form of a line-shaped laser beam L. The laser beam L incident on the galvanometer mirror 12 is reflected in a direction determined in accordance with the angle of the galvanometer mirror 12, and after passing through the cylindrical lens 4, it is made incident on the specimen A.

When the laser beam L is incident on the specimen A, part of the laser beam L penetrates the specimen A, and a large portion thereof is transmitted inside the specimen A in the form of a straight line. Then, the laser beam L excites a fluorescent substance disposed in the path of the laser beam L and generates fluorescence F. Because the laser beam L is moved in the horizontal plane by operating the scanning unit 3, it is possible to cause the fluorescence F to be emitted from the region inside the specimen A where the laser beam L moves, in other words, from a region in a plane which is extremely thin in the vertical direction.

The fluorescence F produced is emitted in all directions; however, part of the fluorescence F which travels along the observation optical axis B is collected by the objective lens 14, and thereafter is imaged by the image-forming lens 15 and the image is acquired by the image-acquisition device 16. In this embodiment, because a CCD camera is employed as the image-acquisition device 16, it is possible to obtain a single fluorescence image by acquiring the fluorescence F emitted within the time during which the laser beam L scans the specimen A in one direction.

With the microscope examination apparatus 1 according to this embodiment, because the plane through which the laser beam L passes inside the specimen A is coincident with the focal plane C of the objective lens 14 in the observation optical system 6, the image acquisition device 16 acquires a fluorescence image that is focused on a sectional plane of the specimen A intersected by a plane including the path of the laser beam L. In such a case, according to this embodiment, because the fluorescence F is mainly emitted only from the focal plane C of the objective lens 14, substantially no fluorescence F from other positions contaminates the acquired fluorescence image, and therefore, it is possible to acquire a clear fluorescence image with high spatial resolution and high contrast.

According to this embodiment, because fluorescent substances at various positions are excited by the line-shaped laser beam L having an extremely narrow beam diameter, the grid density of the laser beam L at each position on the focal plane C is high, and it is possible to emit bright fluorescence F. Therefore, compared to a conventional apparatus in which a band of excitation light is made incident, an advantage is afforded in that it is possible to acquire a bright fluorescence image without increasing the size of the light source unit 2.

According to this embodiment, the line-shaped laser beam L fanned out by the galvanometer mirror 12 is made incident on the specimen A as series of line-shaped laser beams L which are made parallel to each other by the cylindrical lens 4. Therefore, when viewed from a direction along the observation optical axis B, it is possible to irradiate the entire region of the specimen A with laser beams L having uniform grid density, and it is thus possible to acquire a fluorescence image which does not require brightness adjustment.

When the wavelength of the laser beam L is changed, it is possible to acquire a fluorescence image of a different wavelength by changing the filter 17.

With the microscope examination apparatus 1 according to this embodiment, by oscillating the galvanometer mirror 12 in one direction, it is possible to scan the entire examination region with the line-shaped laser beam L, and it is possible to acquire a single fluorescence image. Therefore, after that, by oscillating the galvanometer mirror in the opposite direction once the stage 5 has been moved slightly up or down, it is possible to acquire a cross-sectional fluorescence image through a horizontal plane at a different position in the direction of the observation optical axis B. Thus, by repeating this procedure, it is possible to acquire a plurality of two-dimensional fluorescence images at different positions in the vertical direction. By combining these two-dimensional fluorescence images using image processing, it is possible to obtain a three-dimensional fluorescence image.

With such a configuration, it is possible to obtain a three-dimensional fluorescence image of the specimen A without changing the position in the vertical direction of the observation optical system 6 or the plane scanned by the laser beam L. Therefore, it is possible to obtain a two-dimensional fluorescence image which is always in focus, while keeping the focal plane C of the objective lens 14 in the observation optical system 6 fixed at the horizontal plane scanned by the laser beam L.

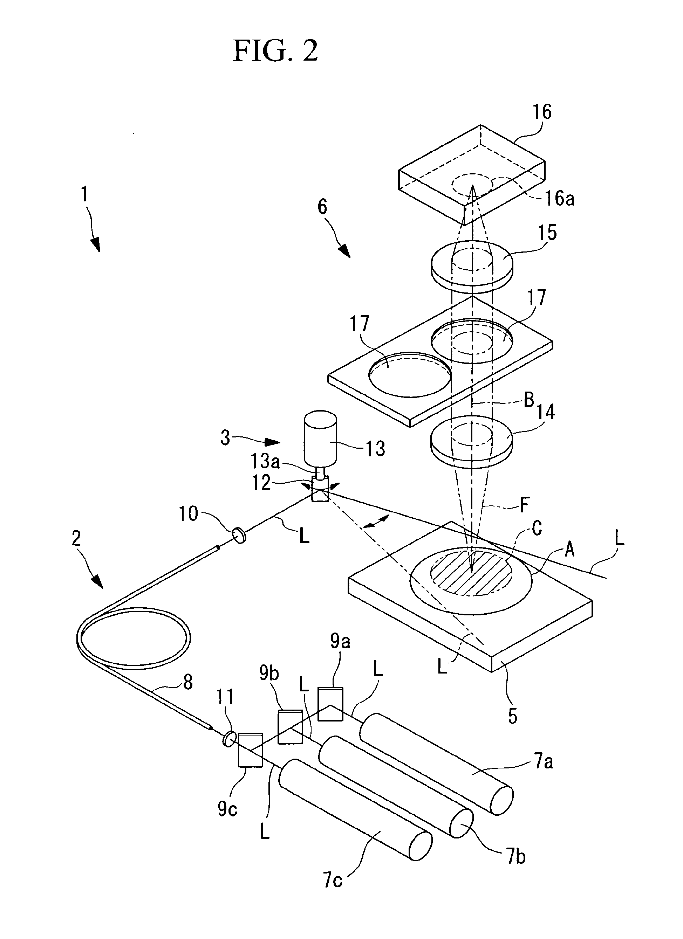

In the microscope examination apparatus 1 according to this embodiment, the laser beam L which is fanned out by the galvanometer mirror 12 is converted to a laser beam L that moves in a translational manner by the cylindrical lens 4. Instead of this, however, as shown in Fig. 2, it is possible to make the laser beam L fanned out by the galvanometer mirror 12 be directly incident on the specimen A, without using the cylindrical lens 4. In such a case, when viewed along the observation optical axis B, the grid density of the laser beam L decreases as it moves away the galvanometer mirror 12; therefore, it is necessary to correct for this in the acquired fluorescence image. The computer 40 is omitted in figures from Fig. 2 onward.

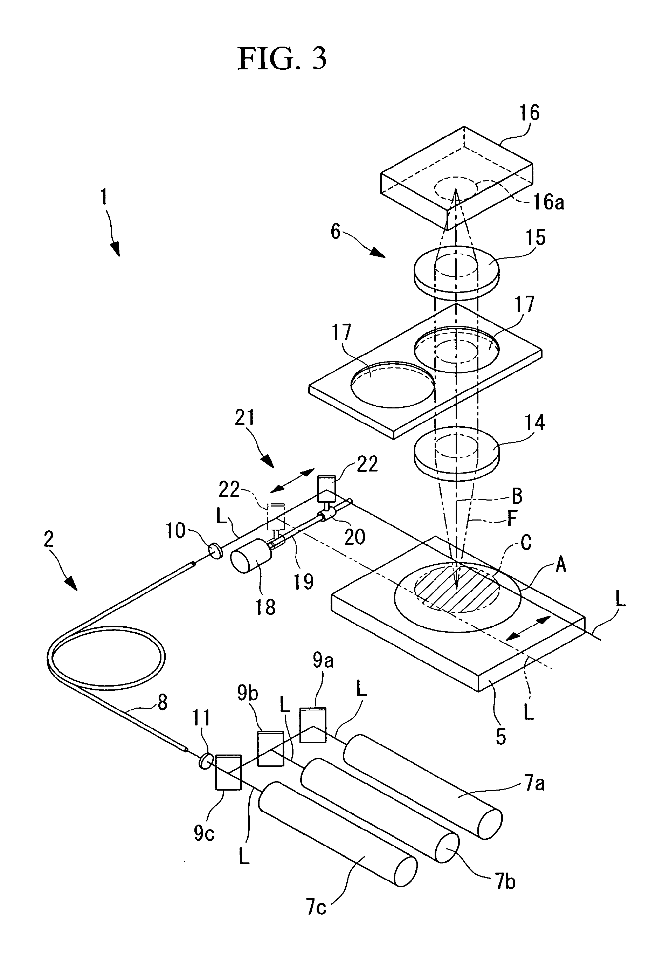

The laser beam L is scanned by the galvanometer mirror 12 which is oscillated back and forth by the motor 13. Instead of this, however, as shown in Fig. 3, a mirror 22 which is fixed at an inclined angle may be translated in a straight line by a linear translation mechanism 21 formed of a motor 18, a ball screw 19, and a slider 20, to scan the laser beam L. In such a case, because the line-shaped laser beams L move in a translational manner while remaining parallel, it is not necessary to correct the fluorescence image after acquisition.

Naturally, a polygon mirror may be used in place of the galvanometer mirror 12.

Although a single line-shaped laser beam L is scanned, a plurality of line-shaped laser beams L may be scanned instead. Furthermore, rather than scanning the line-shaped laser beam L, a plurality of small laser light sources such as laser diodes (not shown in the drawing) may be employed to irradiate a plurality of laser beams L in parallel with gaps therebetween.

The microscope examination apparatus 1 according to this embodiment has been illustrated using an example in which the observation optical system 6 is disposed above the specimen A. Instead of this, however, the stage 5 may be constructed of a transparent material and a second observation optical system (not shown in the drawing) may also be provided below the specimen A so that the observation optical systems 5 and 6 flank the specimen A. By doing so, it is possible to simultaneously acquire cross-sectional fluorescence images in the same horizontal plane of the specimen A from above and below.

In general, in the half above the specimen A, the fluorescence image acquired by the observation optical system 6 is bright and sharp, and in the half below the specimen A, the fluorescence image acquired by the second observation optical system is bright and sharp. Therefore, when moving the specimen A upward and downward using the stage 5 to acquire a three-dimensional fluorescence image, it is possible to select a clear image from among the fluorescence images acquired from above and below the specimen A, which allows a clear three-dimensional fluorescence image to be constructed.

Compared to a case where the single observation optical system 6 is rotated to acquire images from above and below the specimen A, it is possible to acquire a clear three-dimensional fluorescence image in a short period of time without employing a large apparatus for rotating the observation optical system 6.

In the description of the microscope examination apparatus 1 according to this embodiment, the fluorescence F emitted from the specimen A is acquired to obtain a fluorescence image. In practice, however, in many instances it is desirable to determine from which site on the specimen A the fluorescence image is obtained. For example, if the specimen A is a small laboratory animal such as a mouse, it is useful to be able to determine from which site of which organ the obtained fluorescence image is emitted. If the fluorescence image is to be displayed in relation to the external form of the specimen A, the external form of the entire specimen A can be acquired by a CCD camera, and the obtained outline image can be displayed superimposed on the fluorescence image. In contrast, to acquire an outline image of a site which cannot be seen from outside, such as an internal organ, an X-ray, MRI, or CT apparatus or the like is normally used, resulting in the drawback that the apparatus becomes large.

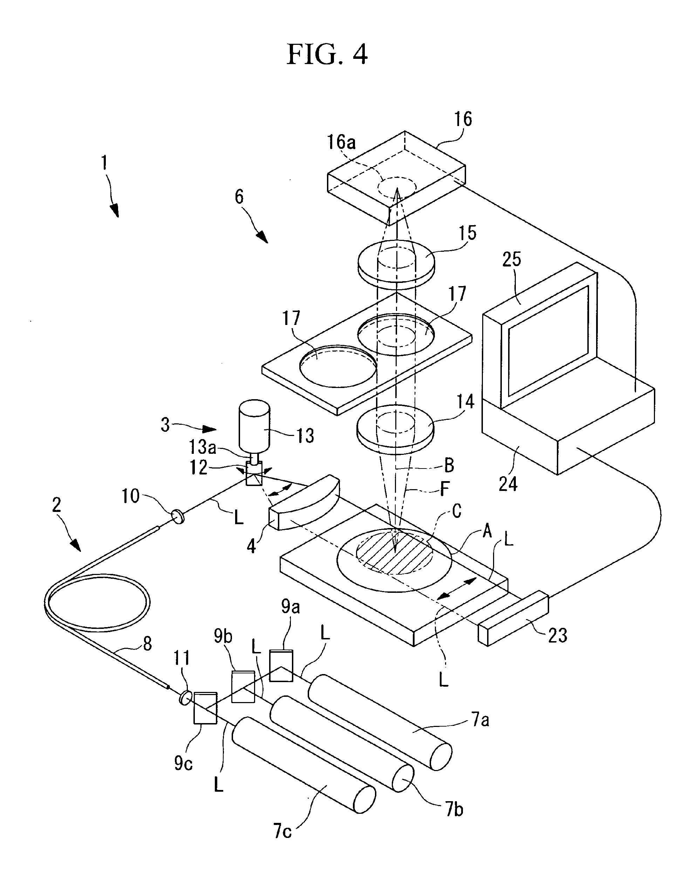

In this embodiment, an intensity-distribution detector 23, such as a photodiode, for detecting the intensity of the laser beam L after being transmitted through the specimen A may be provided, as shown in Fig. 4. The intensity-distribution detector 23 may include a plurality of detector components arranged in one row parallel to the scanning direction of the laser beam L, which enables the intensity of each path of the laser beam L passing through the specimen A to be detected after transmission.

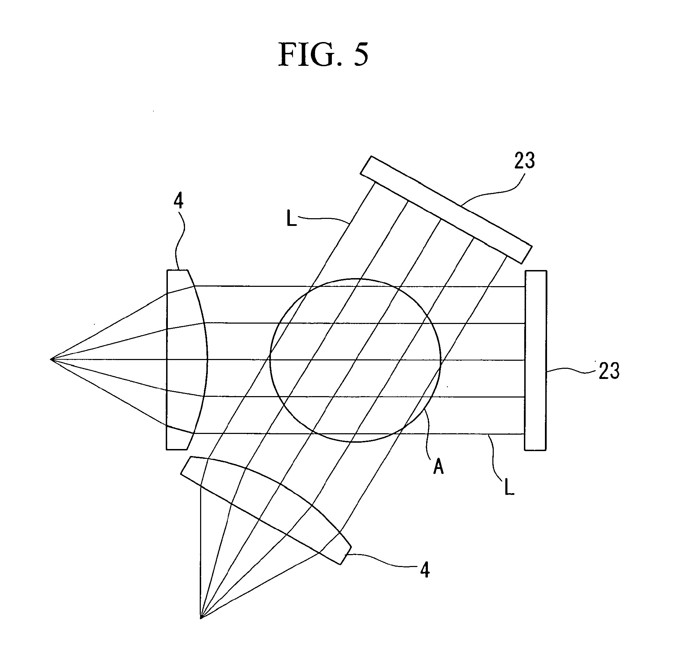

In this case, it is possible to rotate the stage 5 about the observation optical axis B. Thus, after fixing the stage 5 and detecting a row of intensities of the laser beam L transmitted in one direction, as shown in Fig. 5, the stage 5 is rotated about the observation optical axis B, the laser beam L is made incident on the specimen A from another direction, and a row of intensities of the laser beam transmitted from that direction is detected.

Based on the intensity information of the laser beams L in a plurality of directions detected in this way, the transmittance of each site on the specimen A can be calculated. Based on this transmittance, it is possible to extract the outline of sites which cannot be seen from outside, such as an internal organ. The outline image indicating the extracted outline is superimposed with the corresponding fluorescence image in an image processing unit 24 and is displayed on a monitor 25. Accordingly, it is possible for the observer to easily determine to which site of the specimen A the obtained fluorescence image corresponds, thus facilitating examination.

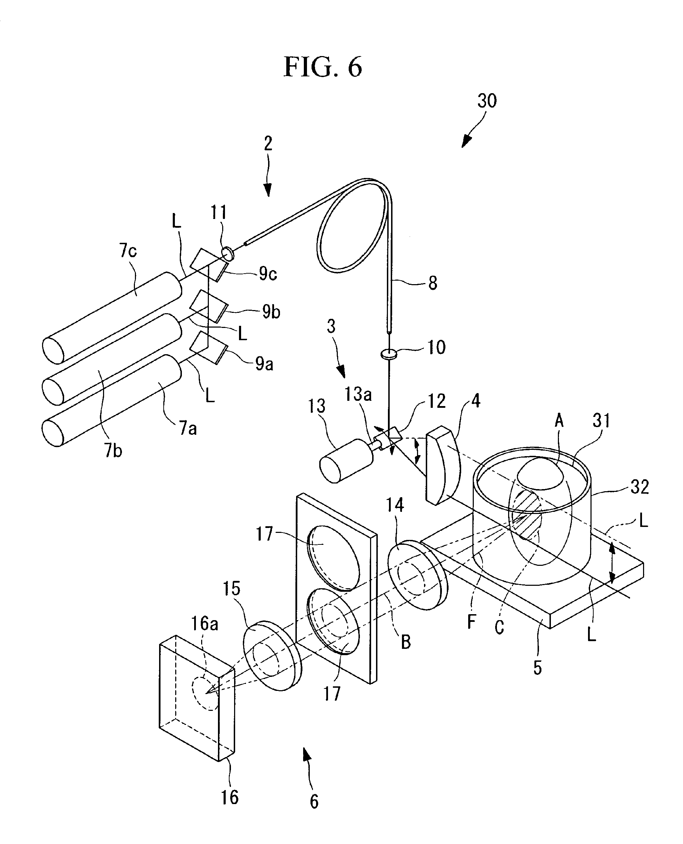

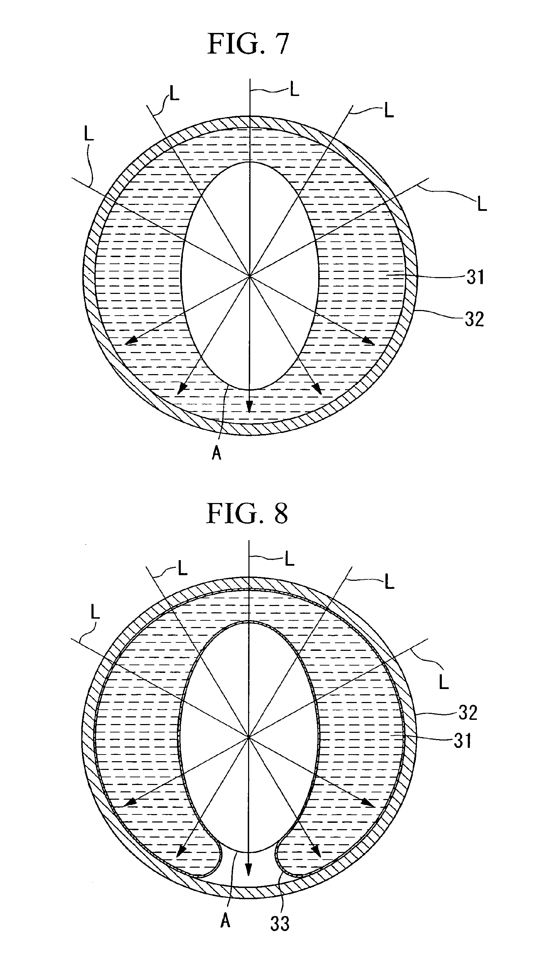

Next, a microscope examination apparatus 30 according to a second embodiment of the present invention is described with reference to Figs. 6 and 7.

In the description of this embodiment, parts having the same construction as those in the microscope examination apparatus 1 according to the first embodiment described above are assigned the same reference numerals, and a description thereof is omitted here.

In the microscope examination apparatus 30 according to this embodiment, the specimen A is contained in a vessel 32 holding water 31, and the specimen A is irradiated from the side with the line-shaped laser beam L. A fluorescence image is acquired with the observation optical system 6, which has a horizontal observation optical axis B disposed laterally with respect to the specimen A.

The vessel 32 is a transparent cylindrical vessel having a fixed thickness dimension and is mounted on the stage 5 so that the mouth thereof is directed vertically upwards. The specimen A is contained inside the vessel 32, and the water (medium) 31 is held between the vessel 32 and the specimen A.

The water 31 has a refractive index substantially the same as the refractive index of the specimen A and is disposed so as to fill the space between the vessel 32 and the specimen A. When performing in vivo examination of the specimen A, such as a small laboratory animal, the head of the specimen A should be exposed above the surface of the water to allow it to breath.

The galvanometer mirror 12 is disposed beside the vessel 32 and is made to oscillate back and forth about a horizontal rotary shaft 13a so as to scan the line-shaped laser beam L in the vertical direction. As shown in Fig. 7, the laser beam L scanned by the galvanometer mirror is always incident on the outer surface of the vessel 32 so as to pass through the central axis of the cylindrical vessel 32. In other words, the incident direction is set so as to be perpendicular to the outer surface of the vessel 32.

Similarly to the first embodiment, the observation optical system 6 is disposed so that the observation optical axis B is orthogonal to the scanning plane of the laser beam L and so that the focal plane C of the objective lens 14 is coincident with the scanning plane of the laser beam L.

With the microscope examination apparatus 30 according to this embodiment, the line-shaped laser beam L oscillated by the galvanometer mirror 12 is oriented horizontally by means of the cylindrical lens 4 and is orthogonally incident on the outer surface of the vessel 32. Because the vessel 32 is transparent and has a fixed thickness, the laser beam L passes through without experiencing refraction and enters the vessel 32. The laser beam L introduced into the vessel 32 then travels through the water 31 and is incident on the specimen A disposed in the water 31.

In this embodiment, because the water 31 has the same refractive index as the specimen A and adheres to the surface of the specimen A, the laser beam L travels unimpeded, that is to say, experiencing almost no refraction at the interface between the specimen A and the water 31, and passes through the specimen A.

Thus, with the microscope examination apparatus 30 according to this embodiment, even if the laser beam L is incident on the surface of the specimen A at an angle, it travels without being refracted. Therefore, the laser beam L can be disposed o as to pass through the focal plane C of the objective lens 14 regardless of the orientation of the specimen A and the position of incidence. Accordingly, it is possible to produce bright fluorescence at the focal plane C of the objective lens 14, which allows a bright, clear fluorescence image to be acquired.

In order to acquire a three-dimensional fluorescence image with the microscope examination apparatus 30 according to this embodiment, the stage 5 is rotated about the central axis of the vessel 32. By doing so, as shown in Fig. 7, the laser beam L passes through different cross sections of the specimen A. Therefore, a plurality of two-dimensional fluorescence images can be acquired, and a three-dimensional fluorescence image can be constructed by processing the plurality of acquired fluorescence images.

In this case, even if the vessel 32 is rotated about the central axis thereof, the incident angle of the laser beam at the outer surface of the vessel 32 does not change. Therefore, there is no refraction of the laser beam L at the vessel 32. In addition, the incident angle of the laser beam L on the outer surface of the specimen A disposed inside the vessel 32 changes when the vessel 32 is rotated. However, because the specimen A is surrounded by the water 31 having substantially the same refractive index as the specimen A, there is no refraction of the laser beam L at the interface of the water 31 and the specimen A. Therefore, the laser beam incident on the specimen A always travels without being refracted, and fluorescence is produced at the focal plane C of the objective lens 14. Thus, it is possible to always acquire bright, clear fluorescence images.

In this embodiment, the water 31 is held inside the vessel 32 and the specimen A is immersed in the water 31. Instead of this, however, as shown in Fig. 8, a bag-like member 33 formed of resin, such as silicone rubber or the like, in which the water 31 is enclosed, may be sandwiched between the vessel 32 and the specimen A. With this configuration, the bag-like member 33 is in close contact with the inner surface of the vessel 32 and the outer surface of the specimen A, with no gap therebetween, which allows the space between the specimen A and the vessel 32 to be filled with the water 31. It is thus possible to obtain the effects as described above, without wetting the specimen A with the water 31. This is advantageous in cases where it is desirable not to wet the specimen A with the water 31.

Although the water 31 is selected as a medium having the same refractive index as the specimen A in the embodiment described above, it is not limited thereto.

## Claims

1. A microscope examination apparatus comprising:
a light-source unit configured to emit a line-shaped excitation beam;
an observation optical system having an observation optical axis disposed in a direction orthogonal to the excitation beam from the light-source unit,
wherein a focal position of the observation optical system is disposed in the path of the excitation beam from the light-source unit.

2. A microscope examination apparatus according to Claim 1, wherein the light-source unit includes a scanning unit configured to scan the line-shaped excitation beam in a direction orthogonal to the excitation beam and the observation optical axis.

3. A microscope examination apparatus according to Claim 2, wherein the scanning unit scans the line-shaped excitation beam in a focal plane of the observation optical system.

4. A microscope examination apparatus according to Claim 2 or Claim 3, wherein the scanning unit includes a translational-conversion member configured to make the line-shaped excitation beam move in a translational manner.

5. A microscope examination apparatus according to Claim 1, wherein the light-source unit includes a plurality of light sources configured to emit a plurality of line-shaped excitation beams which are separated in a direction orthogonal to the observation optical axis.

6. A microscope examination apparatus according to Claim 5, wherein the plurality of line-shaped excitation beams are disposed in parallel with gaps therebetween.

7. A microscope examination apparatus according to one of Claims 1 to 6, further comprising:
a stage for mounting a specimen; and
a stage driving mechanism configured to move the stage in a direction parallel to the observation optical axis.

8. A microscope examination apparatus according to one of Claims 1 to 7, further comprising:
a first imaging unit configured to image an outline of the specimen;
a second imaging unit configured to image the fluorescence from the specimen, which is detected by the observation optical system; and
a display unit configured to superimpose and display an outline image and a fluorescence image formed by the first and second imaging units.

9. A microscope examination apparatus according to Claim 8, wherein the first imaging unit includes an intensity-distribution detecting unit configured to detect an intensity distribution of the excitation beam passing through the specimen and forms the outline image of the specimen based on a plurality of intensity distributions of the excitation beam that are detected by making the excitation beam pass through the specimen in a plurality of directions.

10. A microscope examination apparatus according to one of Claims 1 to 9, further comprising a second observation optical system which is disposed at the opposite side from the observation optical system so as to flank the line-shaped excitation beam emitted from the light source unit.

11. A microscope examination apparatus according to one of Claims 1 to 10, further comprising:
a transparent vessel configured to contain the specimen; and
a medium having the same refractive index as the specimen, the medium filling a gap between the vessel and the specimen inside the vessel,
wherein the vessel is disposed so that the line-shaped excitation beam is orthogonally incident at an outer surface of the vessel.

12. A microscope examination apparatus according to Claim 11, wherein
the medium is a liquid filled in a bag-like member that can deform so as to make close contact with the surface of the specimen; and
the bag-like member has the same refractive index as the specimen and is disposed between the light-source unit and the specimen.

13. A microscope examination method comprising the steps of:
introducing line-shaped excitation beam to a specimen;
aligning an observation optical axis of an observation optical system in a direction orthogonal to the excitation beam;
disposing a focal position of the observation optical system in a path of the excitation beam; and
detecting fluorescence emitted from inside the specimen in the direction of the observation optical axis with the observation optical system.

14. A microscope examination method according to Claim 13, further comprising the step of:
scanning the excitation beam in a direction orthogonal to both the excitation beam and the observation optical axis.

15. A microscope examination method according to Claim 14, further comprising the step of:
scanning the excitation beam along a focal plane of the observation optical system.

16. A microscope examination method according to Claim 14 or Claim 15, wherein the excitation beam is made to move in a translational manner.

17. A microscope examination method according to Claim 13, wherein a plurality of line-shaped excitation beams which are spaced in a direction orthogonal to the observation optical axis are incident on the specimen.

18. A microscope examination method according to Claim 17, wherein the plurality of line-shaped excitation beams are arranged in parallel with spaces therebetween.

19. A microscope examination method according to one of Claims 13 to 18, further comprising the step of:
moving the specimen in a direction parallel to the observation optical axis.

20. A microscope examination method according to one of Claims 13 to 19, further comprising the steps of:
imaging an outline of the specimen;
imaging the fluorescence from the specimen, which is detected by the observation optical system; and
superimposing and displaying the imaged outline image and fluorescence image.

21. A microscope examination method according to Claim 20, wherein the outline of the specimen is imaged based on a plurality of intensity distributions of the excitation beam which is made to pass through the specimen in a plurality of directions.

22. A microscope examination apparatus according to one of Claims 13 to 21, wherein
the specimen is contained in a transparent vessel;
a medium having the same refractive index as the specimen fills a gap between the vessel and the specimen; and
the excitation beam is incident so as to be orthogonal to an outer surface of the vessel.

23. A microscope examination method according to Claim 22, wherein
the medium, which is a liquid, is filled in a bag-like member which can deform so as to be in close contact with the surface of the specimen and which has the same refractive index as the specimen; and
the excitation beam is made incident on the specimen via the bag-like member.

24. A microscope examination method comprising the steps of:
introducing a line-shaped excitation beam to a specimen;
aligning an observation optical axis of an observation optical system in a direction orthogonal to the excitation beam; disposing a focal position of the observation optical system in a path of the excitation beam;
acquiring a plurality of two-dimensional fluorescence images by repeating a step of two-dimensionally detecting fluorescence emitted from inside the specimen in the direction of the observation optical axis with the observation optical system, and a step of moving the specimen in the direction of the observation optical axis; and
creating a three-dimensional fluorescence image of the specimen based on the acquired plurality of two-dimensional fluorescence images.
